# EUROPEAN PATENT APPLICATION

(11) **EP 4 439 348 A1**
(43) Date of publication of application: **02.10.2024**
(21) Application number: 23165749.5
(22) Date of filing: 30.03.2023
(51) Int. Cl.: G06F 21/33, G06F 21/35, G06F 21/44, H04L 9/40, G06F 21/86

(54) **DIGITAL WALLET AUTHENTICATION WITH A HARDWARE SECURITY MODULE**

(71) Applicant: THALES DIS CPL USA, INC., Austin, TX 78759 (US)
(72) Inventor: SUDHAKARAN, Suraj, Austin, 78726 (US)
(74) Representative: Lotaut, Yacine Diaw

(57) **Abstract**

Provided is a system and method for authenticating a user to a Hardware Security Module (HSM) with a Wallet Reader by way of a Digital Wallet on a Mobile Device. The Digital Wallet contains electronic documents and digital identites signed by at least one entity to certify the user of the Digital Wallet and the electronic documents stored therein are authentic. Certificates are chained to a trust anchor by way of an HSM provisioning process and Digital Wallet creation process. In some embodiments the HSM creates secrets and private key material that are loadable onto a secure element of the Mobile Device for hardened security. Other embodiments are disclosed.

## Description

### TECHNICAL FIELD

The present invention relates generally to user interaction between a mobile device and a network device, and more particularly, to user authentication and secure entry of credentials to a Hardware Security Module (HSM) cryptographic unit.

### BACKGROUND

A Hardware Security Module (HSM) is a dedicated crypto processing unit specifically designed for the hardware protection of the cryptographic key lifecycle. HSMs are fully contained and complete solutions for cryptographic processing, key generation, and key storage. They act as trust anchors to protect the crypto infrastructure of security-conscious organizations by securely managing, processing, and storing cryptographic keys inside a hardened, tamper-resistant device. HSM protect keys and are used by applications in on premise, virtual, and cloud environments. They are deployed and securely configured remotely in any of these environments.

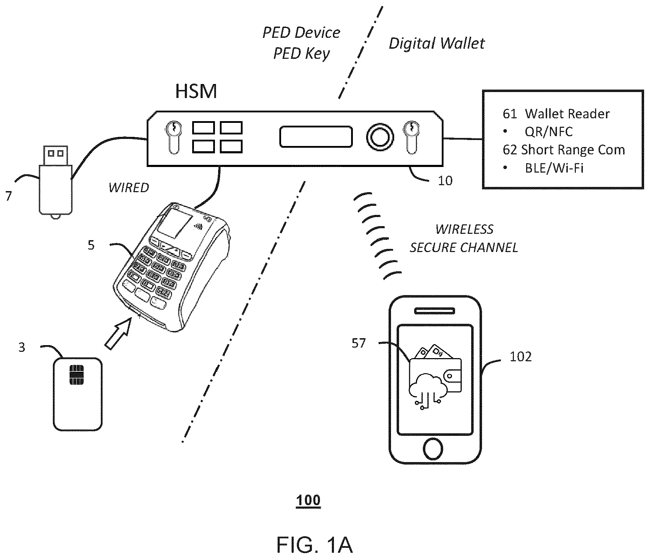

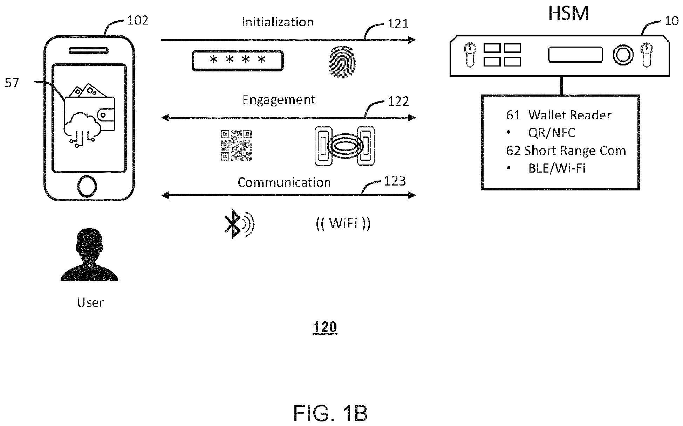

HSMs are secure and operate on sensitive data. Accordingly, only authorized user and applications are allowed management access. Authentication is generally the validation process of formally recognizing a user's identity. Access to a managed HSM is controlled by various interfaces. **FIG. 1** illustrates two physical interfaces for authorizing user access to the HSM **10**, which is achieved by way of the Pin Entry Device (PED) **5** and an optional card **3**, and/or alternatively one or more PED keys **7**. The PED **5** provides PIN entry and secret authentication to the HSM **10**. The PED **5** and PED keys **7** are the primary means of accessing the PED-authenticated HSM's administrative functions once the HSM is deployed. These interfaces prevent key-logging exploits on workstations connected to the host HSM. No password is entered via a computer keyboard to minimize a malicious configuration. With respect to multi-factor authentication, PED **5** and PED keys **7** offer something that a user physically has or something that the user knows.

One problem however with the PED **5** and PED keys **7** is that the devices are bulky and take up physical space. Additional hardware is needed to for the PED device in order to connect it to the HSM in wired mode. Although the PED key **7** is smaller and portable, it can easily be misplaced or lost easily. Moreover, users are required to recall or retrieve passwords, which could be forgotten or insecurely misplaced. The user experience with these devices is contentious and outdated. Device updates are also prone to hacking and require more steps along with more hardware. Finally, the price of these auxiliary interface devices adds cost. Accordingly, a need for a more practical interface is contemplated.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

Provided is a method and system by which a user is authenticated to an HSM using a Digital Wallet on a Mobile Device. This solution is an alternative to the PED and PED keys and brings "something that you are" into the multifactor authentication required by HSMs. The solution removes the need of wired connection and introduces wireless mechanisms for close proximity communication. In one arrangement, digital identities in the Digital Wallet are issued to security officers assigned to the HSM so they may use their own mobile device to connect to the HSM. Those users can then be authenticated for HSM related operations using the Digital Wallet thereon when in vicinity of the HSM. The Digital Wallet stores the user access role information and metadata that would otherwise be stored by the HSM in the PED or PED keys during HSM initialization and a corresponding key ceremony process.

As shown in **FIG 1A****,** the solution provides an alternative to PED **5** and PED keys **7**, that employs a Mobile Device **102** with a Digital Wallet **57** for wireless PIN entry and secret authentication to the HSM **10** requiring Trusted Path Authentication. The Digital Wallet **57** contains one or more secrets, generated by the HSM **10**, that authenticates a role, cloning domain, or remote server. The Digital Wallet **57** is a solution that overcomes the user experience and cost problems described above with respect to the PED **5** and PED keys **7**. To provide this functionality, the HSM **10** includes a Wallet Reader **61** with a Short-Range Transmission Module to interpret QR codes for image presentation interaction on a display of the Mobile Device, and/or Near Field Communication (NFC) for tapping interaction with the Mobile Device to engage the Digital Wallet and retrieve information for setting up a secure channel. The Digital Wallet gets the info from Wallet Reader **61** on the HSM first and sends its info to secure channel establishment. The HSM also includes a Communication Module **62**, that responsive to a successful QR code interaction and/or NFC interaction, switches overto Blue Tooth Low Energy (BLE) or Wireless Fidelity (Wi-Fi) Aware to create a secure communication channel from the retrieved information, thereby providing a trusted data exchange of the User Document between the HSM and Mobile Device.

In some embodiments, a system comprises the HSM **10** and the Mobile Device **102** with the Digital Wallet **57** executing thereon communicatively coupled to the HSM. The HSM **10** detects a presence of a Mobile Device with a Digital Wallet **57** executing thereon in proximity of the HSM. Responsive to the Mobile Device **102** verifying an identify of the user of the Digital Wallet by user PIN entry or user biometric factors, the HSM **10** retrieves information from the Digital Wallet **57** over short-range transmission for setting up a Secure Channel with the HSM. It then establishes the Secure Channel from the HSM to the Digital Wallet using the information. Over this secure channel, the HSM **10** authenticates the Mobile Device as a trusted device to the HSM from at least one certificate stored thereon. The HSM **10** then authenticates a User Document of the Digital Wallet **57** on the Mobile Device **102** over the wireless Secure Channel from credentials in the at least one certificate.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts a Mobile Device with a Digital Wallet for securely authenticating a user and granting access controls to the HSM in accordance with one embodiment;
**FIG. 1B** illustrates a method for initialization, engagement, and communication between the Mobile Device, Digital Wallet and HSM in accordance with one embodiment;
**FIG. 2A** is a block diagram of an environment for binding a Mobile Device, Digital Wallet and HSM by way of certificate chaining, document signing and provisioning of user services in accordance with one embodiment;
**FIG. 2B** is a further representation of the block diagram of FIG 2A in an environment providing telecommunication and cloud services in accordance with one embodiment;
**FIG. 3** illustrates an enrollment of a trusted Mobile Device and issuance of a Digital Wallet in accordance with one embodiment; and
**FIG. 4** depicts exemplary components of a Hardware Security Module (HSM) in accordance with one embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the context of the present description, a Hardware Security Module (HSM) is a hardened, tamper-resistant device that secure cryptographic processes by generating, protecting, and managing keys used for encrypting and decrypting data and creating digital signatures and certificates. The term mobile wallet is one form of digital wallet on a mobile device, like a smartphone or smartwatch. In the context of authenticating a user to the HSM, the term digital wallet is analogous to a digital version of the user's identity, including but not limited to user credentials securely stored in the mobile device. The digital wallet by way of the mobile device may use unique tokens and encryption, and one-time codes to make interactions and transactions more secure while hiding user information and identity.

Still referring to **FIG 1A**, in some embodiments the HSM **10** detects a presence of the Mobile Device **102** with a Digital Wallet **57** executing thereon in vicinity of the HSM, and responsive to the Mobile Device verifying an identify of the user of the Digital Wallet **57** by user PIN entry or user biometric factors, retrieves information from the Digital Wallet **57** using QR codes or NFC for setting up a wireless Secure Channel with the HSM **10**. The HSM then switches over to BLE or Wi-Fi for authentication over the wireless Secure Channel. Two authentication components are provided. A document authentication step validates the signature generated by an Issuing Authority to prove that a User Document is genuine, and validates data sets to compare against a hash of the User Document to prove that attributes are not modified after issuance. A device authentication step proves that the credentials were not cloned, which in one arrangement does so by sending a challenge to the phone and validating the response. Upon successful authentication of the Mobile Device **102** and the User Document, the HSM retrieves administrative policies from the HSM based on the credentials, and establishes a user access role in view of the policies responsive to authenticating the user. This exposes administrative controls accessible to the user by way of their Mobile Device **102**. After authentication, the HSM retrieves an administrative policy and upon comparison to the device and user credentials, determines a mobile device access role according to the authentication of the Mobile Device, and determines a user access role according to the authentication of the User Document and mobile device access role.

As will be described ahead in further detail, the HSM **10** comprises special hardware capabilities to support such Digital Wallet authentication. This includes a Wallet Reader **61** for offline verification functionality, and for displaying QR codes (which Digital Wallet in mobile device scans) and NFC (with a button on HSM for initiating NFC) for tapping interaction. A QR code is a type of barcode that can be read easily by a digital device and which stores information as a series of pixels in a square-shaped grid. QR stands for quick response. The Mobile Device **102** with Digital Wallet **57** includes a camera for scanning the QR code, deciphering the image, and then processing the resulting information. In this arrangement, the HSM includes a visual display for generating and presenting the QR code, which the security officer scans with the Mobile Device **102** with Digital Wallet **57** to initiate the secure session with the HSM over BLE or Wi-Fi aware.

The HSM **10** also includes a short-range communication module **62** for creating the wireless Secure Channel and performing the authentication of the user document and mobile device. It comprises one, or both, of a Blue Tooth Low Energy (BLE) or Wireless Fidelity (Wi-Fi) module. BLE is a power-conserving variant of Bluetooth personal area network technology for short-range communication, designed for use by Internet-connected devices. NFC is a short-range technology allowing the HSM **10** and Mobile Device **102** to briefly engage for information exchange before switching over to the secure communication channel. With this hardware configuration, the HSM **10** provides an alternative to the PED and PED key mechanism previously discussed. It allows for application of the Digital Wallet **57** on the Mobile Device **102** for user authentication on the HSM **10**.

Referring now to **FIG. 1B****,** a method **120** is shown for initialization **121**, engagement **122**, and communication **123** occurring between the Mobile Device **102**, Digital Wallet **57** and HSM **10**. In a preferred embodiment, the method steps are ordered in accordance with ISO 18013-5 for digital document verification in an offline mode. In the Initialization step **121**, the digital document is activated. For example, the user opens their Digital Wallet **57** application (app) on the Mobile Device **102**, and authenticates themselves on their Mobile Device. They can do so using a Personal Identification Number (PIN) entry, biometric input, or multi-factor to gains access to digital identity document in the Digital Wallet **57**. This initialization step **122**, with either the PIN and/or biometric authentication is required before the user is provided access to the digital credential in the Digital Wallet **57**, and is also a prerequisite to any following authentications.

Multi-factor Authentication (MFA) is an authentication method that requires the user to provide two or more verification factors to gain access to a resource. With MFA, a user is granted access only after successfully presenting several separate pieces of evidence to an authentication mechanism - usually from at least two of the following three categories: knowledge--something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

Briefly, ISO 18013-5 does not specify biometric 1:1 matching on a Wallet Reader. The biometrics managed by the Digital Wallet **57** is not covered by ISO. For this, a mechanism is contemplated to obtain the photos of the security officers in advance and have their biometric templates stored in the HSM before shipping from the factory. During HSM initialization **121**, the Digital Wallet **57** releases the biometric template to the HSM and confirm 1-1 or 1:N matching to ensure that the user is in the approved security officer list. A managed service is further contemplated to update the template list in the HSM when security officers are changing, for example, adding or removing. The Digital Wallet **57** provides this additional HSM biometric manager role. Once this role is authenticated, the HSM updates the template using the biometric template stored in the new wallet.

In the engagement step **122**, the Wallet Reader **61** on the HSM displays the QR code, and the and Digital Wallet **57** on the Mobile Device **102** reads the QR code. The information is exchanged between the Wallet Reader **61** and Digital Wallet **57**, or data received over the NFC path, for example, by way of tapping or other manual interaction in close proximity. This information is required by the HSM to thereafter setup the wireless secure channel to secure data retrieval from the Digital Wallet **57**. Accordingly, once the HSM receives this information from the engagement step **122**, it then proceeds to create the secure channel using the information from Device engagement step. Briefly, the mechanism proposed herein for the engagement step **122** reverses that proposed in ISO 18013-5. In ISO 18013-5, the wallet app initiates the session by presenting the session engagement data using QR code or NFC and the wallet reader app is the one scanning the QR code or reading the NFC tag info. Here, in the various embodiments, the reverse occurs. The Wallet Reader **57** on the HSM displays the QR code or presents the NFC tag info that the Wallet will scan to establish communication.

In the following communication step **123,** the HSM then switches over to the secure channel established using the information from Device engagement. This allows for offline data exchange between the Mobile Device 102 the Wallet Reader **61** and data retrieval from the Digital Wallet **57** using the secure channel. Here, the HSM and Digital Wallet **57** are wirelessly connected over BLE or Wi-Fi. At this point, the HSM may be completely offline, and does not need to go on-line or for further verification. There is no need for any back end server or service during verification. Once the communication step **123** is complete, all the verifying and authentication tasks are thereafter completed over the established wireless secure channel. This includes when the HSM validates a signature of the User Document generated by the Document Signer to prove the User Document is genuine, and when the HSM validates data integrity of the credentials in the User Document to prove that attributes were not modified after said issuance. The method steps 121-123 are performed in accordance with the security mechanisms defined in 18013-5 and provide for:

Protection against forgery: Data elements in the Digital Wallet document are signed by the issuing authority (IA). The degree of protection against forgery depends on the degree to which the lA's keys are protected.

Protection against cloning: The Digital Wallet produces a signature or message authentication code over session data. The key used to authenticate the session data is stored only in the Wallet and in turn is signed by the IA. The degree of protection against cloning depends on the degree to which the Wallet authentication key is protected.

Protection against eavesdropping: Communications between Wallet and Wallet Reader (HSM) are encrypted and authenticated. Device Engagement uses a separate communication channel to mitigate the risk of Man in the Middle (MITM) attacks. In addition, the reader can detect MITM attacks by validating the anti-cloning signature or message authentication code, which is created using a key for which the public part is signed by the IA in the Digital Document in the Wallet. If Wallet Reader authentication is used, then Wallet can detect MITM attacks before returning any data.

Protection against unauthorized access: The ability for the Wallet Reader (HSM) to send a request message is only authorized to the entity that participates in the device engagement. The encryption key for communications between the Wallet and Wallet Reader (HSM) is derived from an ephemeral key pair from both the Wallet and Wallet Reader (HSM). The public key of the Wallet is shared only through device engagement. Since device engagement is only short-range this protects against unauthorized access. Further access control methods can be used after receiving the request message from the Wallet Reader (HSM).

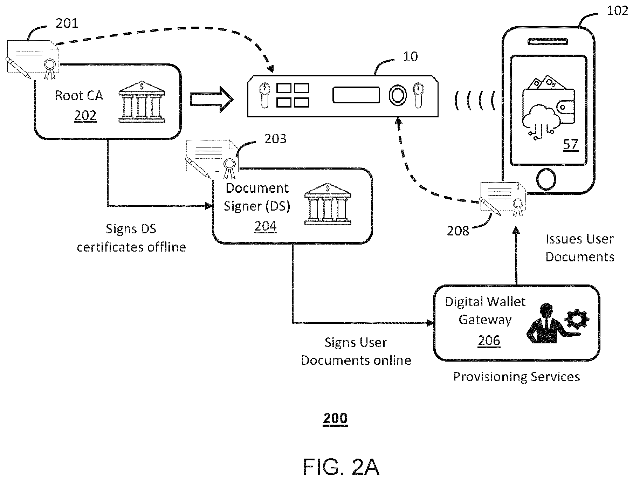

**FIG. 2A** is a block diagram of an environment **200** for binding a Mobile Device, Digital Wallet and HSM by way of certificate chaining, document signing and provisioning of the mobile device and user services. In this environment **200**, there is shown a root Certificate Authority **202**, a Document Signer **204**, and a Digital Wallet Gateway **206**. Binding occurs when all devices have been provisioned, for example, certificates have been installed on both the HSM and Mobile Device, and user and device credentials have been verified and and authenticated to respective users and devices.

The root CA **202** is a trusted entity that serves as the trust anchor in a chain of trust for all entities in the environment **200**. It acts to validate the identities of entities, such as websites, email addresses, companies, or individual persons, and bind them to cryptographic keys through the issuance of electronic documents known as digital certificates. It issues digital certificates to authenticate content sent from servers or other cloud services. One of these certificates, the root CA certificate **201** corresponds to the credentials of the root CA **202** and is stored in the HSM **10**, which the HSM will verify during its assessment along with other certificates associated with the Mobile Device **102** and Digital Wallet **57** as part of a chain of trust validation procedure. The root CA **202** certifies other intermediate certificate authorities, one of which is the Document Signer **204**.

The Document Signer (DS) **204**, by way of a certificate signing request to the root CA **202**, receives its own DS certificate **203**, which includes its own credentials, hashes and key materials. In this way, the DS certificate **203** is chained back to the trust anchor of the root CA certificate **201**. Each customer with their own sets of HSMs may be assigned their own independent DS **204** and respective DS certificate **203** to ensure data independence. This closes the customer loop such that one digital identify document issued to a customer cannot be used with a different HSM or customer. The DS certificate **203** is also part of the Digital Credential in the User Wallet, and can also be stored in the HSM 10 with the root CA certificate **201**.

The HSM will verify the certificate chain as part of the chain of trust validation procedure. Once assigned, the Document Signer **204** can thereafter signs its own user documents, consisting of electronic documents and digital identities, independent of the root CA **202** to be created with, or installed in, the Digital Wallet. These signed user documents contain identification information, including but not limited to credentials of the assigned user of the Digital Wallet **57**, which the HSM will authenticate via the certificate chain. The signed user documents also contain HSM specific information associated with that user for accessing the HSM, which the HSM will verify in order to ensure that user is granted access rights to that specific HSM. In some embodiments, the Document Signer **204** signs the User Document containing digital documents and identity information of a specific user prior to issuance of the Digital Wallet.

The Digital Wallet Gateway **206** provides provisioning services and issues the signed user document to the Digital Wallet **57** of a respective Mobile Device **102** for a specific user. It personalizes the Digital Wallet **57** to contain the digital documents and identification information associated with the user; namely, what is referred to collectively as the signed user document **208**. Accordingly, each digital document and identification information comprising a user document signed by the Document Signer **204** is in turn certified by the root CA **202**. Again, it is envisioned, that for each customer, there is one corresponding Document Signer **204** for that customer, and one DS certificate **203** for that customer, each of which is stored on the HSM by way of a provisioning step for later certificate chain verification.

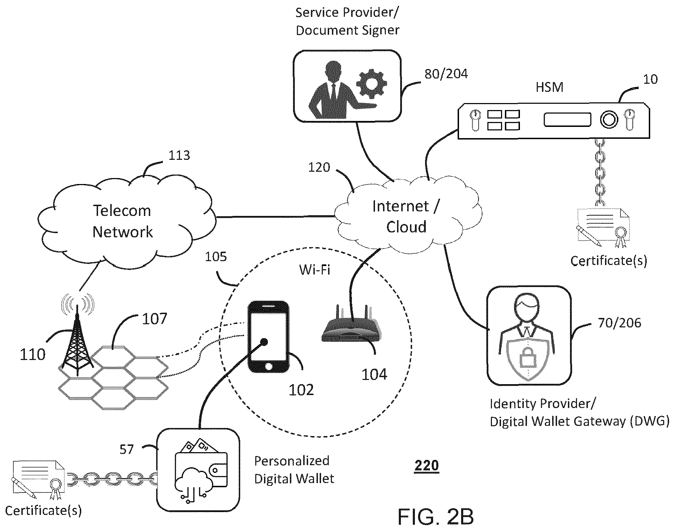

**FIG. 2B** is a further representation of the block diagram of FIG 2A in an environment providing telecommunication and cloud services in accordance with one embodiment. It depicts an exemplary communication environment **220** for personalizing, issuing and installing a Digital Wallet **57** onto a Mobile Device **102** for authentication of a user of that mobile device to the HSM **10**. Mobile Device **102** and HSM **10** may be communicatively coupled to components and network devices in the communication environment **100** via an online or offline mode. Use of the Digital Wallet **57** is a new approach to HSM operations that facilitates tap and go, or scan and go, for interacting with the HSM. It introduces a "who you are" factor in the HSM authentication process. It uses a wireless direct communication channel between the Digital Wallet app and HSM instead of a wired channel. It uses digitally signed document and certificate chains instead of PED keys. It provides for the use of a centralized security officer management system for each customer for security officer management from the factory to customer premises

In this environment, the Document Signer **204** includes, or may be additionally serviced by, a cloud Service Provider **70**. As a third-party entity it offers a cloud-based platform, infrastructure, application, and storage services (e.g. PasS, SasS, lasS). For example, it may host resource services for the HSM **10** or multiple HSMs in a data center. The service provider **70** provides on-demand availability of computer system resources including data storage, computing power, and cryptographic services without direct oversight and management by the user. In this configuration, the Digital Wallet Gateway **206** may coordinate a transfer of user documents to be signed in the HSM **10**, for example, digital documents and identification information of a user. It can thereafter delegate to other services for enhanced trust, for example, Identity Provider **80** for this authentication, authorization, attestation, attribute provisioning, credentials, certificate authority, trust, and cryptography requests.

In this environment, the Digital Wallet Gateway **206** additionally includes, or may be serviced by, the Identity Provider **80**. The Identity Provider **80** (IdP) is a service that creates, stores and manages digital identities. It provides the user or their internet-connected device authentication with a single set of login credentials. This ensures to other entities that the user is who they claim to be; it supports assertion message types: authentication, attribution and authorization. The Identity Provider **80** may be engaged during an enrollment process, whereby security officers identified by the customer can be enrolled after ID proofing. For example, it may check a valid government ID and compare a live photo of the user with either the government ID photo or a photo that was submitted by the customer in advance. After ID proofing, the user is provisioned with their digital identity by way of the Digital Wallet Gateway **206**, thus tying in digital identity attributes and adding a digital signature coming from the HSM.

The Identity Provider **121** can communicate with other entities and other web service providers via Security Assertion Markup Language (SAML), or data formats like Open ID Connect (OIDC) or Open Authorization (Oauth2). Oath2 allows users to grant websites or applications access to their information on other websites but without giving them the passwords. Here, the Identity Provider **80** authenticates the administrators using the Digital Wallet app **57**. Responsive to receiving a request, each administrative user can individually authenticate with the Identity Provider **80**, and thereafter, via service provider **70**, grant or deny data access and remote configuration to the HSM **10**. As previously noted, the authentication between the Digital Wallet 57 and the HSM 10 can be performed offline.

In some embodiments, the Digital Wallet Gateway (DWG) **206** personalizes the Digital Wallet **57** for the user access role, and loads the Digital Wallet with the User Document on the Mobile Device. It verifies an identity (ID) of the specific user during an on-line enrollment, and provisions the Digital Wallet with the User Document associated with the credentials responsive to ID verification. To ensure binding, the HSM is provisioned with the at least one certificate that is one of a Root Certificate signed by a root Certificate Authority (CA) serving as a trust anchor for the HSM, and a Document Signer Certificate containing credentials of the Document Signer to certify User Documents signed by said Document Signer (DS) and chained to the Root Certificate. After provisioning, the HSM compares the credentials for that specific user and enforces administrative controls in accordance with said administrative policy for that specific user to establish said user access role and said mobile device access role. Thereafter, the HSM binds to the Mobile Device responsive to the enrollment of the Mobile Device, and issuance of the Digital Wallet to a specific user for that Mobile Device. After said provisioning and binding, the steps of detecting, authenticating and establishing are performed by the HSM in off-line mode without need of a back-end connection during presentation and verification of credentials. Once the device and user document is authorized, the HSM exposes administrative controls to the mobile device to allow for user interaction.

The communication environment **100** can include a telecommunication network **113** and an internet communication network (internet) **120**. The telecommunication network **113** can provide a mobile communication link via base receiver **110** for wireless connectivity of a mobile device **102** from one or more cells **107**. In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110**, in turn, can connect the mobile device **102** to the internet **120** over a packet switched link. The internet can support application services and application service layers to provide media or content to the mobile device **102**. By way of the communication environment **100**, the mobile device **102** can establish connections with a service provider **80** and identity provider **70** on the network and with other mobile devices to exchange information or to provide services such as audio, text messaging, media, audio, video, interactive applications, and the like. The service provider **80** can have access to a database that is stored locally or remotely and which can contain profile data. It can also host application services directly, or over the internet **120**.

The mobile device **102** can also connect to the internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. The mobile device **102** can send and receive data to the service provider **80**, identity provider **70** and other remote servers on the mobile communication environment. In one example, the mobile device **102** can send and receive audio, video, or other multimedia content from the database to these providers, for example, photos or licenses for identity proofing.

The HSM **10** and the Mobile Device **102** each comprises one or more processors and memory coupled to the one or more processors, wherein the memory includes computer instructions which when executed by the one or more processors causes the one or more processors to perform its operational steps.

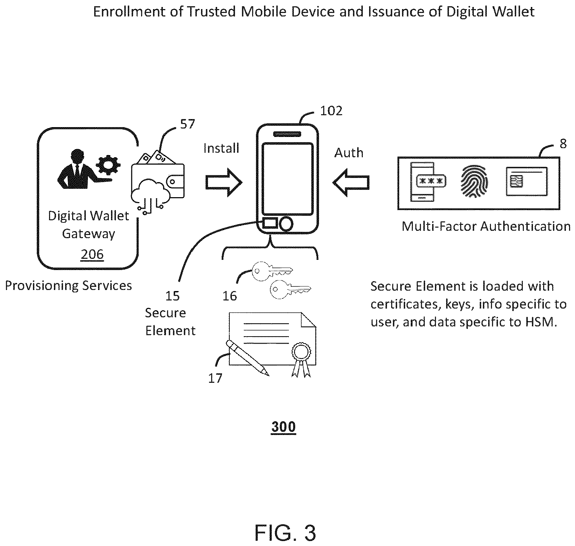

**FIG.** 3 illustrates an enrollment of a trusted Mobile Device and issuance of a Digital Wallet in accordance with one embodiment. In one use-case example, the Digital Wallet **57** is a secure downloadable app for securely connecting and authenticating the user to the HSM, that by way of an enrollment process confirms the user's identity, and is configured to install credentials in the Digital Wallet required by the HSM to authenticate the user. Here, the Digital Wallet Gateway **206** performs provisioning services on the Mobile Device **102**. Briefly, it should also be noted again, that the HSM has previously undergone a warranting and commissioning process, followed by a provisioning, whereby the root CA certificate **201** (see FIG 2A) and the Document Signer certificate **203** (see FIG 2A) have been installed on the HSM **10**, which allows for authentication of the Digital Wallet in an offline mode.

As shown, the Digital Wallet Gateway **206** provisions a secure element **15** of the Mobile Device **102**. Only the key are stored in the secure element **15**. Other data such as certificates, and information specific to the user, such as identification information (SSN, passport number, ID, photos, etc.) of the user, and data specific to the HSM, such as identification information (serial number, IP address, MAC address, etc.) of the HSM are encrypted using the keys in the SE on the mobile storage. In some embodiments a private key is embedded in a secure element **15** of the Mobile Device **102** by way of the enrollment. The secure element **15** provides an additional layering of hardening, or hardened security. That private key is accessible to the Digital Wallet **57** for authenticating the Mobile Device of that particular user to am HSM by way of the Document Signer certificate and the root certificate provisioned in the HSM. This binds the Digital Wallet to the HSM. Once the provisioning is complete, and at least one signed user document containing the digital documents and identification information of the user is installed, that user may engage the HSM with their Mobile Device as shown in FIG 1B. The User Document includes the credentials, the public key, and a signature over a hash of the credentials by way of a private key corresponding to a key pair for the public key and private key.

In some embodiments, the HSM **10** authenticates the Mobile Device **102** as a trusted device by sending a challenge to the Digital Wallet that then encrypts the challenge with a private key stored in the secure element **15** of the Mobile Device and responds to the HSM with a challenge response. It validates that the challenge response was signed on the Mobile Device with the private key by way of a public key in the at least one certificate. In one arrangement it does this as per ISO 18013-5. The HSM authenticates the Mobile Device if the validating is successful. Thereafter the HSM **10** authenticates the User Document by hashing the credentials to produce a reference hash, decrypting the signature with a public key to produce a decrypted hash, and comparing the reference hash with the decrypted hash. The HSM authenticates the User Document of the Digital Wallet if the comparing is successful.

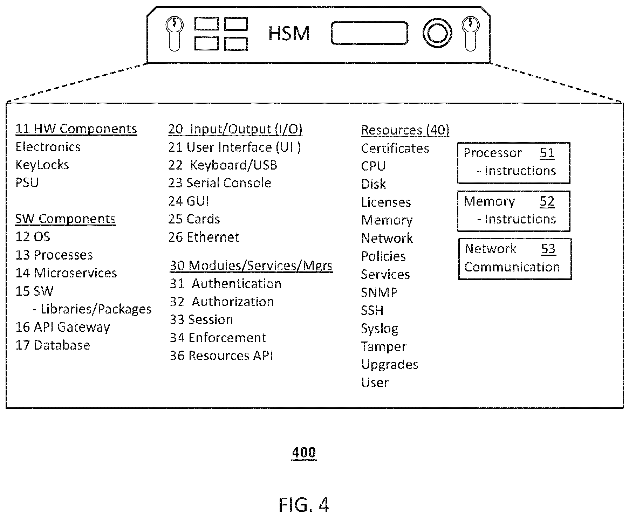

**FIG. 4** depicts exemplary components of the Hardware Server Module (HSM). The HSM **10** is a physical computing device that, among other capabilities, safeguards and manages digital keys, performs encryption and decryption functions for digital signatures, and provides for strong authentication and other cryptographic functions. As a security hardened unit, the HSM **10** records tamper evidence, such as visible signs of tampering or logging and alerting, and provides for tamper responsiveness such as deleting keys upon tamper detection. The HSM **10** contains one or more secure cryptoprocessor and sensor chips to prevent tampering and bus probing, or a combination of chips in a module that is protected by the tamper evident, tamper resistant, or tamper responsive packaging.

The HSM **10** is in effect a computer system comprising one or more processors **51** and memory **52** coupled to the one or more processors, wherein the memory **52** includes computer instructions which when executed by the one or more processors causes the one or more processors to perform the operations of the methods described herein. The HSM may be connected over the network to other machines via the network communication **53** device interface. In a networked deployment, the machine may operate in the capacity of a server or a client user machine in server-client user network environment, or as a peer machine in a peer-to-peer, or distributed, network environment.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable memory **52** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

### HSM types

A "general purpose" (GP) HSM is a hardened, tamper-resistant hardware device that strengthen encryption practices by generating keys, encrypting and decrypting data, and creating and verifying digital signatures. GP HSMs may be assembled in clusters and act as a single hardware Root of Trust. It is a critical component of public key infrastructures (PKIs) to generate and protect root and certificate authority keys; code signing to ensure software remains secure, unaltered and authentic; and creating digital certificates for credentialing and authenticating proprietary electronic devices for Internet of Things (IoT) applications and other network deployments. A General Purpose HSM is flexible and can be used in any application that uses cryptographic keys which does not require the additional security controls and regulations imposed by a Payment HSM. Examples include management of the symmetric keys used for database encryption, and management and use of the asymmetric keys used for the creation of digital signatures and certificates to support PKI (Public Key Infrastructure) and crypto wallets.

A "payment" HSM is a hardened, tamper-resistant hardware device that is used primarily by the retail finance or banking industry to provide high levels of protection for cryptographic keys and customer PINs used during the issuance of magnetic stripe and EMV chip cards (and their mobile application equivalents) and the subsequent processing of credit and debit card payment transactions. Payment HSMs normally provide native cryptographic support for all the major card scheme payment applications and undergo rigorous independent hardware certification. Payment HSMs and management tools provide flexible, efficient transaction security for retail payment processing environments, internet payment applications, and web-based PIN delivery.

An HSM "Appliance" is a physical computing system that, like other HSMs, among other capabilities, safeguards and manages digital keys, performs encryption and decryption functions for digital signatures, and provides for strong authentication and other cryptographic functions. As a security hardened unit, an HSM Appliance records tamper evidence, such as visible signs of tampering or logging and alerting, and provides for tamper responsiveness such as deleting keys upon tamper detection. An HSM Appliance has added capabilities to connect to an IP network, asynchronously generate events, run a web server, and any other processes that can run on a general purpose motherboard.

The acronym "IP" designates any protocol of the Internet protocol suite for operation of network applications, such as, for instance: i) in the Application layer of the OSI model: the Hypertext Transfer Protocol (HTTP) or its secure version HTTPS, DHCP, SMTP, TLS/SSL, etc., ii) in the Transport layer of the OSI model which can be used to transmit data over the Internet or any Local Area Network (LAN) : the Transmission Control Protocol (TCP), the User Datagram Protocol (UDP) needing only one port for full-duplex, bidirectional traffic, the Stream Control Transmission Protocol (SCTP) and the Datagram Congestion Control Protocol (DCCP) which also use port numbers that match the services of the corresponding TCP or UDP implementation, if they exist; and iii), in the Internet (Network) layer: Internet Protocol (IPv4 or IPv6), ICMP, IGMP, etc.

In some embodiments an HSM Appliance includes therein a PCIe card as an independent tamper protected module with its own security scope and certification. The HSM Appliance may be designed or configured as either, or both, a general purpose HSM or a payments HSM. A "cloud HSM" provides same functionality as HSM Appliances with the benefits of a cloud service deployment, without the need to host and maintain on premises appliances. A HSM deployment can provide for Software as a Service (SaaS), Platform as a Service (PaaS), or Infrastructure as a Service (laaS) models.

The main role of a payment HSM is to protect cryptographic keys and other security sensitive data in a highly secure manner, such that the integrity of the overall payment process is maintained, and provide audit and system logs of HSM usage. To that end, HSMs offer the highest level of security by always storing cryptographic keys in intrusion-resistant hardware and providing up to date reporting of its operation. Commonly, HSMs are housed in a data center of a computing resource provider or any similar securely hosting area. More specifically, any HSM hosted in the data center may be attached directly to a server, for instance in a rack, and can be accessed on-site by an operator e.g., through console attach to the HSM via a universal serial bus (USB) connection implementing a USB-C interface, for example.

### HSM terms

The term "provisioning" refers generally to providing data or information to a device, such as an HSM or mobile device, for allowing a user to operate that device, for example, according to a policy including but not limited to user credentials, device configurations, access rights, user roles, permissions, and so on. It may include aspects of configuring, commissioning or warranting the device as defined below. It may also include partitioning the device and assigning access roles or permissions for hosting tenants thereon.

The term "configuring" refers to the process or procedure of setting up or changing the parameters of the device for its operational or administrative use. It can also refer to the configuring of resources/services offered by the device (e.g., network, security, users, data protection, etc.) and associated objects (e.g. keys, data, devices, drivers, etc.). Configuration may be further defined by access rights, permissions of policies and for different users or groups (e.g., administrators, officers, users, etc.

The term "commissioning" is the process of changing from using the pre-placed HSM manufacturer's trust to the customer's trust by the end-user, usually within an environment controlled by a service provider. The term "warranting' is the process of establishing manufacturer's trust in the HSM, usually through a software controlled factory installation process. The term "enforcement" means confirming to adherence of a policy, for example, to confirm a user has permissions to access, view, update or otherwise interact with a resource, service or object on the device.

### Other HSM Embodiments

Operational use of the (GP or Payment) HSM **10** for establishing an End to End (E2E) trusted HSM setup using secure device as shown is primarily by way of the components shown in the figure, but understandably, many more components, electronics, and modules are present in a typical HSM. Those components shown are those mostly related, and suitable for use, for implementing the foregoing inventive methods. Hardware (HW) components **11** represent general electronics for operating the HSM (e.g., processors, central processing units, security, sensors, memory, network devices, ports, power supply units (PSU), wires, keylocks, etc.). The Hardware also contains memory to run operating system and input-output (I/O) devices for interaction. It comprises different types of processors, such as a crypto processor, security processor, general processing unit (GPU), central processing unit (CPU) to assist in protection, management of keys and hardware acceleration with the operating system. The keys, or any other data, can be stored in the database for persistence. The hardware architecture is designed to protect and manage digital keys, and can perform encryption, decryption, digital signature generation and verification.

In one embodiment, the aforementioned (GP or Payment) HSM 10 functionality and methods for the End to End (E2E) trusted HSM setup using the trusted device 5 is configurable as a micro-service. The customer configuration file is exposed via a micro-services API for End to End (E2E) trusted HSM setup using the trusted device.

Micro-services are independent and lightweight processes designed to perform specific tasks. They are typically handled and managed within the HSM by way of the OS **12**. Micro-services **14** can communicate with each other and with external systems over specialized protocols and application programming interface (API) **16**. Micro service are built using software libraries/packages **15**, which are a self-contained set of independent and interchangeable software component that implement a specific functionality. Micro-services **14** and Processes **13** are built using these software libraries/packages **15**. By way of these microservices, applications can implement a third-party Microservice provider's generic API to a service to deliver Payment HSM capabilities. In this manner, for example, a 3^{rd} party customer by way of APIs can partition their workload to optimized payment HSMs for performing specific tasks (e.g. ECC/RSA key gen, PIN translations, etc.) according to their microservice model. As another example, a micro-service with a customer facing API for an End to End (E2E) trusted HSM setup using the trusted device is contemplated. The API can include options allowing the customer to configure trust anchors and certificate chain management for generating and programming the secure content (e.g. IP addresses for network configuration setup) on their workstations and HSM cluster within the protected environment.

The Operating System (OS) **12** is a software component that executes on top of hardware, for example, the general processor, to manage hardware resources and peripherals run HSM jobs/processes and help in execution of other processes **13.** Ubuntu is an exemplary OS that provides an embedded Linux distribution with libraries and packages. Ubuntu (GNU / Linux) is a multitasking Operating System capable of executing several processes (tasks) simultaneously. Different processes **13** for performing the HSM functions (data protection, key management, pin translations, etc.) are scheduled by the operating system **12**. A thread is the basic unit to which the operating system allocates processor time. A process **13** is an instance of a computer program that is executed by one or many threads in the GPU or CPU. One or more threads run in the context of the process. A thread can execute any part of the process code, including parts currently being executed by another thread.

In another embodiment, an API **16** is provided for End to End (E2E) trusted HSM setup using the trusted device 5 when configured as a micro-service. The API can be a RESTful API using HTTP requests to produce and consume data related to network config services via at least one of a GET, PUT, POST, PATCH and DELETE command type. The API includes a command set for each stage of warranting, commissioning, and provisioning the HSM during initial set-up and for life-cycle HSM management, including but not limited to certificate management at each stage.

The Applications Programming Interface (API) **16** provides a connection between computers or between computer programs/applications, and/or between computers and people. It is a type of software interface, offering a service to other pieces of software. The API provides a communication channel between HSM components, internal processes **13** and/or micro services **14**. These APIs are exposed on top of input/output (I/O) **20** interfaces. External systems and/or people communicate with HSM via the I/O interfaces **20**, such as a basic user interface (Ul) **21**, or more sophisticated graphical user interface (GUI) **24** The HSM can also communicate with external systems through hardware IO interfaces, such as the keyboard **22**, serial port **23**, smart card **25**, Ethernet **26**, optical ports, USB ports, etc. External systems (host computers in a data center) can also talk to HSM software interface via APIs exposed on top of individual hardware interfaces (e.g., network device driver, disk/memory management, etc.).

The HSM **10** includes a local console **23** that is serial connected over e.g., a USB-C interface. The serial interface can be used by operations personnel, namely operators, referred to as DCOps (standing for Data Center Operations), who have physical access to the HSM for manually issuing commands to the HSM. Such USB-C interface is used, for all configuration throughout the HSM service, including initial configuration and cumbersome provisioning processes. The HSM also includes managerial Graphical User Interface (GUI) **24** that over an Ethernet **26** connection allow for remote configuration of the HSM. Also, the I/O **20** can be used to configure network settings, SSH certificates, upgrades, licenses and devices (e.g. CPU, Disk, memory,etc.). Operator (Java) cards **25** also provide a means for provisioning and securing the HSM using key shares and key splits.

The HSM also includes services **30** by way of modules, processes and service managers. Some services may be internal to the HSM, and others may be selectively exposed via the API gateway **16** to external entities or services. Examples of services **30** include authentication **31**, authorization **32**, session manager **33**, enforcement **34**, resource API manager **36**, and quorum manager **37**. Accordingly, service managers can be invoked/managed/configured remotely (external) via their APIs, for example, from a web based GUI via Internet connection over Ethernet to the HSM **10**.

The HSM also includes (internal) resources **40** which can be externally configured via the normal I/O interfaces **20**, and also, for some, (internally and externally) via any of the module/service managers **30** and their respective APIs. Examples of HSM resources include, but are not limited to, certificates, licenses, policies, device management, services, upgrades and so on. Each resource **40** has a respective API for software modules, processes or microservices to interact with the respective resource. The HSM offers access and services to each resource **40** via the resources API **36**. Aside from payments HSM related tasks (e.g. encryption/decryption, key management, etc.), this includes: certificate/license management, SNMP, SSH, memory management/configuration, network management/configuration, upgrade installations/services, user resources, and so on.

The architectural style for APIs is typically categorized as either being SOAP (former acronym for "Simple Object Access Protocol" but referring now to a "Service Oriented Architecture", SOA for Web services) or REST (Representational State Transfer), and both are used to access Web services. While SOAP relies solely on XML to provide messaging services, REST offers a more lightweight method, using URLs in most cases to receive or send information. REST uses different HTTP 1.1 verbs, also known as access "methods" to perform tasks. These methods are GET, POST, PUT, and DELETE, which refers to the reading, updating, creating and deleting of operations concerning objects or resources, respectively. Unlike SOAP, REST does not have to use XML to provide the response. Some REST-based Web services output the data in Command Separated Value (CSV), JavaScript Object Notation (JSON) and Really Simple Syndication (RSS). The advantage with REST is that the output needed can be obtained in a form that is easy to parse within the language of the application specifically concerned.

In the embodiments of the invention presented herein, REST offers an alternative to, for instance, SOAP as method of access to a web service. In order to be used in a REST-based application, a web service needs to meet certain constraints. Such a web service is called RESTful. A RESTful web service is required to provide an application access to its web resources in a textual representation and support reading and modification of them with a stateless protocol and a predefined set of operations. By being RESTful, web services provide interoperability between the computer systems on the internet that provide these services. RESTful APIs embody the rules, routines, commands, and protocols that integrate the individual microservices, so they function as a single application. In a RESTful web service, requests made to a resource's URL will elicit a response with a payload formatted in HTML, XML, JSON, or some other format. The response can confirm that some alteration has been made to the resource state, and the response can provide hypertext links to other related resources. When HTTP is used, the operations (HTTP methods) available can comprise: GET, POST, PUT, DELETE, PATCH, and/or OPTIONS.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system, comprising
a Hardware Security Module (HSM); and
a Mobile Device with a Digital Wallet executing thereon communicatively coupled to the HSM, wherein
the HSM comprises one or more processors and memory coupled to the one or more processors, wherein the memory includes computer instructions which when executed by the one or more processors causes the one or more processors to perform the operational steps of:
detecting a presence of a Mobile Device with a Digital Wallet executing thereon in proximity of the HSM;
responsive to the Mobile Device verifying an identify of the user of the Digital Wallet by user PIN entry or user biometric factors, retrieving information from the HSM over short-range transmission;
establishing a Secure Channel from the HSM to the Digital Wallet using the information;
authenticating the Mobile Device as a trusted device to the HSM over the Secure Channel from at least one certificate stored thereon;
authenticating a User Document of the Digital Wallet on the Mobile Device over the Secure Channel from credentials in the at least one certificate;
retrieving an administrative policy and therefrom:
determining a mobile device access role according to the authentication of the Mobile Device;
determining a user access role according to the authentication of the User Document and mobile device access role; and
exposing administrative controls on the HSM accessible to the user by way of the Mobile Device according to the mobile device access role and user access role.

2. The system of claim 1, further comprising
a Document Signer to sign the User Document containing digital documents and identity information of a specific user prior to issuance of the Digital Wallet; and
a Digital Wallet Gateway (DWG) for personalizing the Digital Wallet for said user access role, and loading the Digital Wallet with the User Document on the Mobile Device,
wherein the HSM is provisioned with the at least one certificate that is one of:
a Root Certificate signed by a root Certificate Authority (CA) serving as a trust anchor for the HSM; and
a Document Signer Certificate containing credentials of the Document Signer to certify User Documents signed by said Document Signer (DS) and chained to the Root Certificate.

3. The system of claim 2, wherein the DWG
verifies an identity (ID) of the specific user during an on-line enrollment; and
provisions the Digital Wallet with the User Document associated with the credentials responsive to ID verification.
wherein after said provisioning, the steps of detecting, authenticating and establishing are performed by the HSM in off-line mode without need of a back-end connection.

4. The system of claim 1, wherein the HSM comprises:
a Wallet Reader with a short-Range Transmission Module to present
QR codes on a display of the HSM, or
Near Field Communication (NFC) for tapping interaction with the Mobile Device to engage the Digital Wallet and retrieve information from the HSM for setting up the secure channel;
and
a Communication Module, that responsive to a QR code interaction or NFC interaction, switches over to Blue Tooth Low Energy (BLE) or Wireless Fidelity (Wi-Fi) and then creates the secure communication channel from the retrieved information to provide a trusted data exchange of the User Document between the HSM and Mobile Device.

5. The system of claim 2, wherein authenticating the User Document by the HSM further comprises:
validating a signature of the User Document generated by the Document Signer to prove the User Document is genuine; and
validating data integrity of the credentials in the User Document to prove that attributes were not modified after said issuance.

6. The system of claim 5, wherein authenticating the User Document by the HSM further comprises:
hashing the credentials to produce a reference hash;
decrypting the signature with a public key to produce a decrypted hash; and
comparing the reference hash with the decrypted hash; and
authenticating the User Document of the Digital Wallet if the comparing is successful,
wherein the User Document comprises the credentials, the public key, and a signature over a hash of the credentials by way of a private key corresponding to a key pair for the public key and private key.

7. The system of claim 1, wherein the authenticating the Mobile Device as the trusted device by the HSM further comprises:
sending a challenge to the Digital Wallet that then encrypts the challenge with a private key stored in a secure element of the Mobile Device and responds to the HSM with a challenge response;
validating the challenge response was signed on the Mobile Device with said private key by way of a public key in the at least one certificate; and
authenticating the Mobile Device if the validating is successful.

8. A Hardware Security Module (HSM) comprising one or more processors and memory coupled to the one or more processors, wherein the memory includes computer instructions which when executed by the one or more processors causes the one or more processors to perform the operational steps of:
detecting a presence of a Mobile Device with a Digital Wallet executing thereon in proximity of the HSM;
responsive to the Mobile Device verifying an identify of the user of the Digital Wallet by user PIN entry or user biometric factors, retrieving information from the Digital Wallet over short-range transmission for setting up a Secure Channel with the HSM;
establishing the Secure Channel from the HSM to the Digital Wallet using the information;
authenticating the Mobile Device as a trusted device to the HSM over the Secure Channel from at least one certificate stored thereon;
authenticating a User Document of the Digital Wallet on the Mobile Device over the Secure Channel from credentials in the at least one certificate;
retrieving an administrative policy and therefrom:
determining a mobile device access role according to the authentication of the Mobile Device;
determining a user access role according to the authentication of the User Document and mobile device access role; and
exposing administrative controls on the HSM accessible to the user by way of the Mobile Device according to the mobile device access role and user access role.

9. The HSM of claim 8, wherein the HSM includes:
a Wallet Reader with a Short-Range Transmission Module to display
QR codes for image presentation interaction with the Mobile Device, or
Near Field Communication (NFC) for tapping interaction with the Mobile Device
to engage the Digital Wallet and retrieve information from the HSM for setting up the secure channel;
and,
a Communication Module, responsive to a QR code interaction or NFC interaction, switches over to Blue Tooth Low Energy (BLE) or Wireless Fidelity (Wi-Fi) to create the secure communication channel from the retrieved information to provide a trusted data exchange of the User Document between the HSM and Mobile Device.

10. The HSM of claim 8, is provisioned with:
a Root Certificate signed by a root Certificate Authority (CA) serving as a trust anchor for a manufacturer of the HSM; and
a Document Signer Certificate containing the credentials of the Document Signer signed by the root CA and chained to the Root Certificate.

11. The HSM of claim 10 binds to the Mobile Device responsive to an enrollment of the Mobile Device, and an issuance of the Digital Wallet to a specific user for that Mobile Device,
whereby after provisioning, the HSM compares the credentials for that specific user and enforces administrative controls in accordance with said administrative policy for that specific user to establish said user access role and said mobile device access role.

12. The HSM of claim 11, wherein after said provisioning and binding, the steps of detecting, authenticating and establishing are performed by the HSM in off-line mode without need of a back-end connection during presentation and verification of credentials.

13. The system of claim 10, wherein authenticating the User Document by the HSM further comprises:
validating a signature of the User Document generated by the Document Signer to prove the User Document is genuine; and
validating data integrity of the credentials in the User Document to prove that attributes were not modified after said issuance.

14. The HSM of claim 13, wherein authenticating the User Document further comprises:
hashing the credentials to produce a reference hash;
decrypting the signature with the public key to produce a decrypted hash; and
comparing the reference hash with the decrypted hash; and
authenticating the User Document of the Digital Wallet if the comparing is successful,
wherein the User Document comprises the credentials, a public key, and a signature over a hash of the credentials by way of a private key corresponding to a key pair for the public key and private key.

15. The HSM of claim 1, wherein the authenticating the Mobile Device as the trusted device further comprises:
sending a challenge to the Digital Wallet that then encrypts the challenge with a private key stored in a secure element of the Mobile Device and responds to the HSM with a challenge response;
validating the challenge response was signed on the Mobile Device with said private key by way of a public key in the at least one certificate; and
authenticating the Mobile Device if the validating is successful.

16. A method for authenticating a user of a Digital Wallet on a Mobile Device to a Hardware Security Module (HSM), the method comprising the steps of:
detecting a presence of a Mobile Device with a Digital Wallet executing thereon in proximity of the HSM;
responsive to the Mobile Device verifying an identify of the user of the Digital Wallet by user PIN entry or user biometric factors, retrieving information from a Wallet Reader on the HSM over short-range transmission for setting up a Secure Channel with the Digital Wallet;
establishing the Secure Channel from the HSM to the Digital Wallet using the information;
authenticating the Mobile Device as a trusted device to the HSM over the Secure Channel from at least one certificate stored thereon;
authenticating a User Document of the Digital Wallet on the Mobile Device over the Secure Channel from credentials in the at least one certificate;
retrieving an administrative policy and therefrom:
determining a mobile device access role according to the authentication of the Mobile Device;
determining a user access role according to the authentication of the User Document and mobile device access role; and
exposing administrative controls on the HSM accessible to the user by way of the Mobile Device according to the mobile device access role and user access role.
